# EUROPEAN PATENT APPLICATION

(11) **EP 4 597 730 A2**
(43) Date of publication of application: **06.08.2025**
(21) Application number: 25152829.5
(22) Date of filing: 20.01.2025
(51) Int. Cl.: H01M 50/503, H01M 50/507, H01M 50/51, H01M 50/519, H01M 50/269, H01M 50/516, H01M 50/572, H01M 50/574, H02J 7/00, H01M 50/30, H01M 50/209, H01M 50/548, H01M 50/55, H01M 50/298, H01M 50/528

(54) **ELECTRICAL BYPASS PREPARATION FOR FAILING BATTERY CELL**

(30) Priority: 31.01.2024 US 202418429090
(71) Applicant: PACCAR INC, Bellevue, WA 98004 (US)
(72) Inventor: KESSELS, Johannes Theodorus Bernard Anna, 5812 AM Heide (NL); CIATTI, Steve, Bellingham, 98226 (US)
(74) Representative: Gevers Patents

(57) **Abstract**

A battery pack may include a plurality of battery cells arranged in an array and a plurality of bus bars. Each bus bar of the plurality of bus bars may be configured to electrically couple a pair of battery cells in series by attaching to a positive terminal of a first battery cell and a negative terminal of a second battery cell. Each bus bar of the plurality of bus bars may include at least one bypass structure configured to be electrically coupled to a bypass wire. When the bypass wire is electrically coupled to a pair of bus bars, the bypass wire enables at least one battery cell of the plurality of battery cells to be bypassed.

## Description

### BACKGROUND

### Technical Field

The present disclosure relates to a battery pack having multiple cells, specifically a battery pack containing a plurality of battery cells in which at least one battery cell is to be bypassed.

### Description of the Related Art

Electric vehicles have seen a rapid increase in popularity in recent years based on environmental concerns associated with internal combustion engines, and other factors. A known electric vehicle includes a battery to power an electric motor that is mechanically coupled to the wheels of the vehicle to generate vehicle movement via electric power provided by the battery pack. Regulations have been adopted which encourage the development of standards for design and assembly techniques that facilitate the maintenance, repair, and repurposing of batteries and battery packs.

Battery packs may include multiple battery cells which may be fixedly coupled to one another and/or the battery pack. Moreover, electrical connection of battery cells may be accomplished by a bus bar laser welded to cell terminals. Fixedly coupling battery cells and/or laser welding bus bar to cell terminals nearly remove the possibility of cost-effectively repairing a battery pack by replacing a faulty or damaged battery cell.

In addition, batteries for electric vehicles undergo temperature and pressure changes during operation that can lead to problems without proper venting. For example, if battery cells are damaged by overcharging, manufacturing defects, or other causes, the cells vent matter, such as hot gas and debris, during a thermal runaway event. The vented matter from one cell can cause other nearby cells to likewise vent matter, leading to a condition where rapidly increasing temperatures and pressures released by the cells exceed the venting capability of an enclosure around the cells. This can result in failure of the enclosure, as well as potentially more serious and dangerous outcomes such as a battery fire or explosion.

### BRIEF SUMMARY

The present disclosure is generally directed to battery packs and is particularly, but not exclusively, directed to battery packs and related battery technology for electric vehicles. The battery packs and related technology described herein may be particularly useful for implementation in commercial vehicles, including long-haul tractors, but the concepts discussed herein are not necessarily limited thereto and may be applied equally to other electric vehicles and electric vehicle batteries and related battery systems, as well as potentially other fields.

A battery pack may be summarized as including a plurality of battery cells arranged in an array and a plurality of bus bars. Each bus bar of the plurality of bus bars may be configured to electrically couple a pair of battery cells in series by attaching to a positive terminal of a first battery cell and a negative terminal of a second battery cell. Each bus bar of the plurality of bus bars may include at least one bypass structure configured to be electrically coupled to a bypass wire. When the bypass wire is electrically coupled to a pair of bus bars, the bypass wire may enable at least one battery cell of the plurality of battery cells to be bypassed.

In some embodiments, the battery pack may be configured such that when the bypass wire is electrically coupled to a pair of bus bars, the bypass wire creates a short circuit across at least one battery cell to be bypassed.

In some embodiments, the at least one battery cell to be bypassed may have been discharged prior to electrical coupling of the bypass wire to the pair of bus bars, such that the voltage difference across the at least one battery cell to be bypassed is zero volts.

In some embodiments, each bypass structure may include at least one tab extending from the respective bus bar of which the bypass structure is a part.

In some embodiments, each bypass structure further includes at least one aperture extending through a tab of the at least one tab. Each aperture of the at least one aperture may be configured to receive a fastener configured to electrically couple an end of the bypass wire to the tab.

In some embodiments, the tab may extend upward and away from the battery cell, such that a tool may clear the battery cell and the tab when the tool is utilized to tighten the fastener.

In some embodiments, during a venting event, a tab of the at least one tab may be configured to route matter discharged from a vent valve of a battery cell of the plurality of battery cells toward a material collector.

In some embodiments, each bypass structure may include at least one aperture extending through each respective bus bar. Each aperture of the at least one aperture may be configured to receive a fastener configured to electrically couple an end of the bypass wire to the respective bus bar.

In some embodiments, the plurality of bus bars may be configured such that the at least one bypass structure of each bus bar is spaced across an end face of the battery cell in a longitudinal direction from a bypass structure of another bus bar.

In some embodiments, the plurality of bus bars may be configured such that the at least one bypass structure is spaced across an end face of each battery cell of the plurality of battery cells in a longitudinal direction from the bypass structure of another bus bar.

In some embodiments, at least one bus bar of a pair of bus bars of the plurality of bus bars electrically coupled to at least one battery cell to be bypassed may be configured to be cut such that a first cut section of a first cut bus bar of the pair of bus bars is electrically coupled to a terminal of the at least one battery cell to be bypassed and a second cut section of the first cut bus bar of the pair of bus bars is electrically coupled to a first separate battery cell. The bypass wire may be configured to electrically couple the second cut section of the first cut bus bar and one of a cut section of the second cut bus bar electrically coupled to a second separate battery cell and an uncut bus bar of the pair of bus bars, such that the at least one battery cell to be bypassed is bypassed.

In some embodiments, each bus bar of the plurality of bus bars may be positioned on a first face of the battery pack. In other embodiments, the plurality of bus bars may be positioned on a plurality of faces of the battery pack.

In some embodiments, the battery pack may further include a battery management system. The battery management system may be configured to be recalibrated when at least one battery cell of the plurality of battery cells is bypassed. Recalibration of the battery management systems may include at least one of bypassing monitoring of at least one bypassed battery cell, bypassing balancing of the at least one bypassed battery cell, excluding the at least one bypassed battery cell from state-of-charge estimation, excluding the at least one bypassed battery cell from state-of-health estimations, excluding the at least one bypassed battery cell from voltage limits of the battery pack, and excluding the at least one bypassed battery cell from temperature limits of the battery pack.

A method of bypassing at least one faulty battery cell within a battery pack may include electrically coupling a first end of a bypass wire to a bypass structure of a first bus bar and electrically coupling a second end of the bypass wire to a bypass structure of a second bus bar. The first bus bar may be configured to electrically couple a first pair of battery cells in series. The second bus bar may be configured to electrically couple a second pair of battery cells in series. The electrical coupling of the first end of the bypass wire to the bypass structure of the first bus bar and the electrical coupling of the second end of the bypass wire to the bypass structure of the second bus bar causes the at least one faulty battery cell to be bypassed.

In some embodiments, the method of bypassing at least one faulty battery cell within a battery pack may further include creating a short circuit across the at least one faulty battery cell.

In some embodiments, the electrical coupling of the first end of the bypass wire to the bypass structure of the first bus bar may include electrically coupling the first end of the bypass wire to a tab of the bypass structure of the first bus bar. The electrical coupling of the second end of the bypass wire to the bypass structure of the second bus bar may include electrically coupling the second end of the bypass wire to a tab of the bypass structure of the second bus bar.

In some embodiments, the electrical coupling of the first end of the bypass wire to the bypass structure of the first bus bar may include extending a first fastener through an aperture extending through the tab of the bypass structure of the first bus bar. The electrical coupling of the second end of the bypass wire to the bypass structure of the second bus bar may include extending a second fastener through an aperture of the tab of the bypass structure of the second bus bar.

In some embodiments, the electrical coupling of the first end of the bypass wire to the bypass structure of the first bus bar may include fastening the first fastener with a tool positioned between the tab of the bypass structure of the first bus bar and a first battery cell of the first pair of battery cells. The electrical coupling of the second end of the bypass wire to the bypass structure of the second bus bar may include fastening the second fastener with the tool positioned between the tab of the bypass structure of the second bus bar and a first battery cell of the second pair of battery cells. The tab of the bypass structure of the first bus bar may extend upward and away from the first battery cell of the first pair of battery cells, such that a tool may clear the tab of the bypass structure of the first bus bar and any battery cell of the battery pack when fastening the first fastener. The tab of the bypass structure of the second bus bar may extend upward and away from the first battery cell of the second pair of battery cells, such that a tool may clear the tab of the bypass structure of the second bus bar and any battery cell of the battery pack when fastening the second fastener.

In some embodiments, the electrical coupling of the first end of the bypass wire to the bypass structure of the first bus bar may include extending a first fastener through an aperture of the bypass structure of the first bus bar. The electrical coupling of the second end of the bypass wire to the bypass structure of the second bus bar may include extending a second fastener through an aperture of the bypass structure of the second bus bar. The aperture of the bypass structure of the first bus bar may be present on the first bus bar. The aperture of the bypass structure of the second bus bar may be present on the second bus bar.

In some embodiments, the method of bypassing at least one faulty battery cell within a battery pack may further include cutting at least one of the first bus bar and the second bus bar. A first end of the bypass wire may be electrically coupled to a first cut section of the first bus bar. The first cut section of the first cut bus bar may be electrically coupled to a terminal of a first adjacent battery cell. A second end of the bypass wire may be electrically coupled to one of a first cut section of the second bus bar and an uncut bus bar of the first bus bar and the second bus bar. The first cut section of the second cut bus bar may be electrically coupled to a terminal of a second adjacent battery cell, such that the at least one faulty battery cell is bypassed by the bypass wire.

In some embodiments, the method of bypassing at least one faulty battery cell within a battery pack may further include discharging the at least one faulty battery cell, such that the voltage across the at least one faulty battery cell is zero volts.

In some embodiments, the method of bypassing at least one faulty battery cell within a battery pack may further include extending the bypass wire from the first bus bar present on a first end face of the battery pack to the second bus bar present on a second end face of the battery pack. The second end face of the battery pack may be opposite the first end face of the battery pack in a longitudinal direction.

In some embodiments, the method of bypassing at least one faulty battery cell within a battery pack may further include recalibrating a battery management system of the battery pack after the at least one faulty battery cell has been bypassed. The recalibrating of the battery management system may include at least one of bypassing monitoring of the at least one faulty battery cell, bypassing balancing of the at least one faulty battery cell, excluding the at least one faulty battery cell from state-of-charge estimation, excluding the at least one faulty battery cell from state-of-health estimations, excluding the at least one faulty battery cell from voltage limits of the battery pack, and excluding the at least one faulty battery cell from temperature limits of the battery pack.

### BRIEF DESCRIPTION OF THE SEVERAL VIEWS OF THE DRAWINGS

Figure 1 shows a perspective view of an exemplary battery pack of a commercial vehicle, which may include a plurality of layers of battery cell arrays stacked on one another and enclosed within a battery enclosure.
Figure 2 shows a perspective view of a plurality of battery cells of a battery pack according a first example embodiment of the present disclosure.
Figure 3 shows a top view of the plurality of battery cells of Figure 2.
Figure 4 shows a top view of the plurality of battery cells of Figure 2 configured to bypass a battery cell.
Figure 5 shows a top view of a plurality of battery cells of a battery pack according to a second example embodiment of the present disclosure.
Figure 6 shows a side view of a battery cell of the plurality of battery cells of Figure 5.
Figure 7 shows a top view of the plurality of battery cells of Figure 5 configured to bypass a battery cell.
Figure 8 shows a side view of a battery cell of the plurality of battery cells of Figure 7.
Figure 9 shows a top view of a plurality of battery cells of a battery pack according to a third example embodiment of the present disclosure.
Figure 10 shows a top view of the plurality of batter cells of Figure 9 configured to bypass a battery cell.
Figure 11 shows a top view of a plurality of battery cells of a battery pack according to a fourth example embodiment of the present disclosure.
Figure 12 shows a top view of the plurality of battery cells of Figure 11 configured to bypass a battery cell.
Figure 13 shows a top view of a plurality of battery cells of a battery pack according to a fifth example embodiment of the present disclosure.
Figure 14 shows a cross-sectional front view of the plurality of battery cells of Figure 13.
Figure 15 shows a top view of the plurality of battery cells of Figure 13 configured to bypass a battery cell.
Figure 16 shows a perspective view of a plurality of battery cells of a battery pack according to a sixth example embodiment of the present disclosure.
Figure 17 shows a perspective view of the plurality of battery cells of Figure 16 configured to bypass a battery cell.
Figure 18 shows a flow chart of a method of bypassing a battery cell according to the present disclosure.

### DETAILED DESCRIPTION

In the following description, certain specific details are set forth in order to provide a thorough understanding of various disclosed embodiments. However, one skilled in the relevant art will recognize that embodiments may be practiced without one or more of these specific details. In other instances, well-known structures and manufacturing techniques associated with battery packs may not be shown or described in detail to avoid unnecessarily obscuring descriptions of the embodiments.

Unless the context requires otherwise, throughout the specification and claims which follow, the word "comprise" and variations thereof, such as, "comprises" and "comprising" are to be construed in an open, inclusive sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

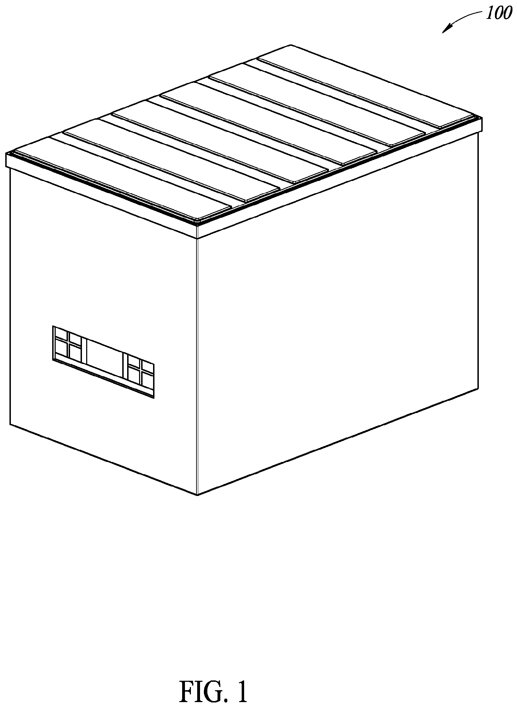

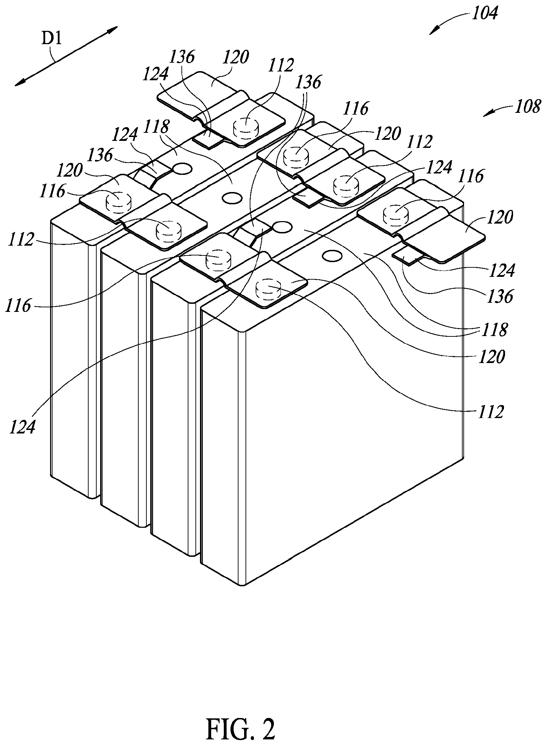

Figure 1 shows a perspective view of an exemplary battery pack 100, which may provide power to a commercial vehicle, for example. A commercial vehicle may utilize a plurality of battery packs 100. The battery pack 100 may include a plurality of battery cells arranged in an array (for example, a linear array) and connected in series with each other and all other battery cells of the battery pack 100. One or more arrays of battery cells may be stacked on each other to form a battery cell stack. A sufficient number of the battery cells may be connected together in series to provide a target battery pack voltage. It should be understood that any of the plurality of battery cells described with herein with reference to Figures 2-17 may be housed within an enclosure of the battery pack 100.

The embodiments described herein include configurations which allow for bypassing one or more faulty battery cells of the plurality of battery cells within the battery pack 100. A desire to bypass the one or more faulty battery cells may be due to a loss of capacity within the one or more faulty battery cells. In some situations, the one or more faulty battery cells may be bypassed due to increased resistance within the one or more faulty battery cells.

An example embodiment of a plurality of battery cells 104 which may be included within the battery pack 100 is shown in Figures 2 through 4. The plurality of battery cells 104 may be arranged in a linear array 108. In some embodiments, the plurality of battery cells 104 may be arranged in a different configuration. Each battery cell of the plurality of battery cells 104 may be fixedly coupled to each other and/or to the battery pack 100. Each battery cell of the plurality of battery cells 104 includes a positive terminal 112 and a negative terminal 116. In some embodiments, including the embodiment shown in Figures 2 through 4, the positive terminal 112 and the negative terminal 116 may both be present on a first face 118 of each respective battery cell of the plurality of battery cells 104.

The plurality of battery cells 104 may be electrically coupled to one another by a plurality bus bars 120. Each bus bar of the plurality of bus bars 120 may be fixedly and electrically coupled to the positive terminal 112 of a first battery cell and the negative terminal 116 of a second battery cell of the plurality of battery cells. In such a configuration, each battery cell of the plurality of battery cells 104 may be fixedly and electrically coupled to two bus bars of the plurality of bus bars 120: a first bus bar connected to the positive terminal 112 and a second bus bar connected to the negative terminal 116. Battery cells at ends (not shown) of the linear array may not be electrically coupled to another battery cell of the plurality of battery cells 104 by way of a bus bar and may instead be coupled to an electrical connection of the battery pack 100, or to a battery cell of another plurality of battery cells, such as in a battery cell of an adjacent stack of battery cells. In some embodiments, each bus bar of the plurality of bus bars 120 may be laser welded to the respective positive terminal 112 and negative terminal 116 to which each bus bar is coupled to ensure a robust electrical connection.

In embodiments in which the positive terminal 112 and the negative terminal 116 are present on the first face 118 of each battery cell, such as in Figures 2 through 4, each bus bar of the plurality of bus bars 120 may similarly be positioned on the first face 118 of each battery cell.

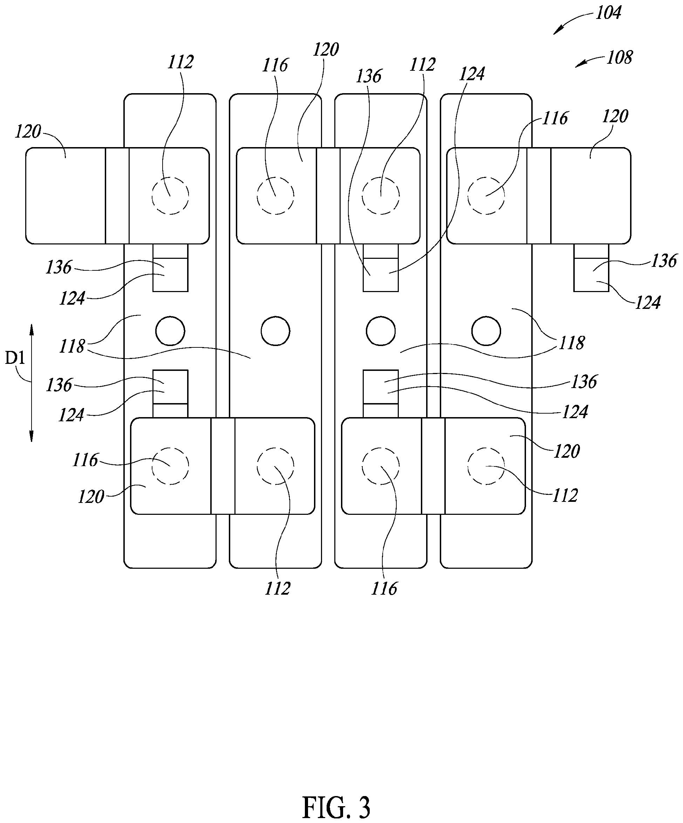

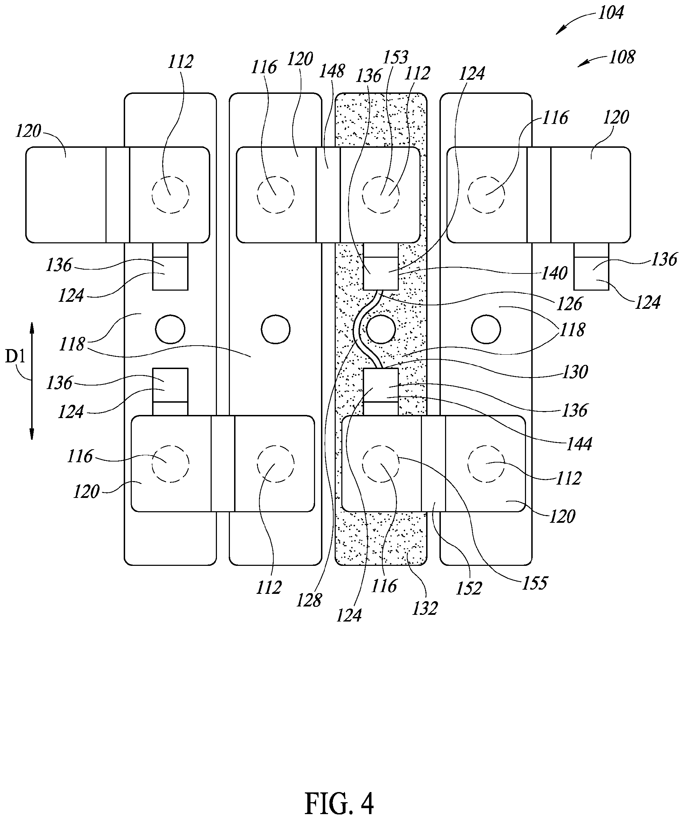

Each bus bar of the plurality of bus bars 120 may include at least one bypass structure 124. Each bypass structure of the at least one bypass structure 124 may be configured to be electrically coupled to one of a first end 126 of a bypass wire 128 or a second end 130 of the bypass wire 128 when a faulty battery cell 132 is to be bypassed, as shown, for example, in Figure 4. The bypass wire 128 may be fixedly coupled to the bypass structures 124 by soldering the bypass wire 128 to the bypass structures 124. An example configuration of bypassing of the faulty battery cell 132 of the embodiment shown in Figures 2 and 3 is shown in Figure 4.

In some embodiments, including the embodiment shown in Figures 2 through 4, each bypass structure of the at least one bypass structure 124 may include a tab 136 extending from the respective bus bar of the plurality of bus bars 120 of which the at least one bypass structure 124 is a part. Each tab 136 may be configured to be electrically coupled to one of the first end 126 and the second end 130 of the bypass wire 128. In some embodiments, the tab 136 may extend from one side toward an opposite side of the plurality of battery cells 104, such that each tab 136 extends toward another tab 136. In some embodiments, the plurality of bus bars 104 may be configured such that the at least one bypass structure 124 of each bus bar 120 is spaced across a battery cell of the plurality of battery cells 104 in a longitudinal direction D1 from the at least one bypass structure 124 of another bus bar 120. In other words, each of the bypass structures 124 may align with another bypass structure 124 such that the bypass structures 124 are only present above every other battery cell of the plurality of battery cells 104. Such a configuration enables a single bus bar design to be implemented for each bus bar of the plurality of bus bars 120. Further, the bypass wire 128 may only need to extend across the first face 118 of a battery cell of the plurality of battery cells 104 when coupled to a pair of active bypass structures 140, 144.

In order to bypass the faulty battery cell 132, the first end 126 of the bypass wire 128 may be electrically coupled to a first bus bar 148 by way of the bypass structure 140 and the second end 130 of the bypass wire 128 may be electrically coupled to a second bus bar 152 by way of the bypass structure 144. Each of the pair of bus bars 148, 152 may be coupled to one of a positive terminal 153 and a negative terminal 155 of the faulty battery cell 132. The first and second ends 126, 130 of the bypass wire 128 may be fixedly coupled to the respective bypass structure of the pair of bypass structures 140, 144.

Such an electrical coupling of the bypass wire 128 to the pair of bus bars 148, 152 by way of the respective bypass structures 140, 144, enables the faulty battery cell 132 to be bypassed. Bypassing the faulty battery cell may be accomplished due to the bypass wire 128 creating a short circuit between the positive terminal 153 of the faulty battery cell 132 and the negative terminal 155 of the faulty battery cell 132. Such a short circuit may be created due to the bypass wire 128 being electrically coupled to the first bus bar 148 coupled to the positive terminal 153 of the faulty battery cell 132 and also being electrically coupled to the second bus bar 152 coupled to the negative terminal 155 of the faulty battery cell 132.

Such a short circuit enables depletion of any energy stored within the faulty battery cell 132. Due to the creation of the short circuit, a cross-section of the bypass wire 128 must be of sufficient size such that the bypass wire 128 is able to withstand a current flowing through the battery pack 100 when the battery pack is maximally charged or discharged.

It should be understood that such a short circuit may be created by electrically coupling the bypass wire to a pair of bus bars which are not mutually attached to an individual battery cell. In such embodiments, multiple battery cells may be included in the short circuit and bypassed. Such a configuration may be utilized in the event multiple faulty battery cells are adjacent to each other.

In some embodiments, the faulty battery cell 132 may be discharged prior to the connecting of the bypass wire 128 to the pair of active bypass structures 140, 144, such that the voltage difference between the positive terminal 153 of the faulty battery cell 132 and the negative terminal 155 of the faulty battery cell 132 is zero volts. This may be done to reduce the possibility of a high inrush current and substantial heat production in the faulty battery cell 132 during bypassing.

The battery pack 100 may further include a battery management system. The battery management system may be configured to monitor a status of each individual battery cell, to balance each individual battery cell, estimate a state-of-charge of the battery pack 100, state-of-health of the battery pack 100, and determine a voltage limit of the battery pack 100. Additionally, the battery management system may be configured to activate circuit breakers if a battery cell begins to operate outside of a preferred operating range *(i.e.,* a battery cell is detected as a faulty battery cell). The battery management system may be configured to be recalibrated when the faulty battery cell 132 of the plurality of battery cells 104 is bypassed. Recalibration of the battery management system may include at least one of bypassing monitoring of a bypassed battery cell, bypassing balancing of the bypassed battery cell, excluding the bypassed battery cell from state-of-charge estimation, excluding the bypassed battery cell from state-of-health estimations, excluding the bypassed battery cell from voltage limits of the battery pack, and excluding the bypassed battery cell from temperature limits of the battery pack.

The battery pack 100 may be safely operated after the battery management system has been recalibrated to account for the bypassed battery cell. The overall capacity of the battery pack 100 may be reduced due to the bypassing of the faulty battery 132. The reduction in overall capacity, however, may be only a small fraction of the original overall capacity.

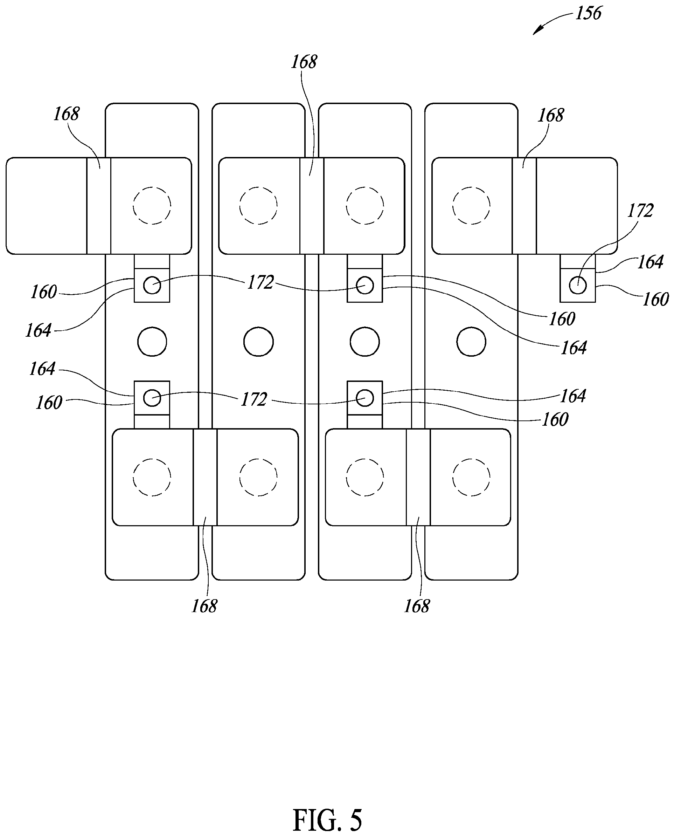

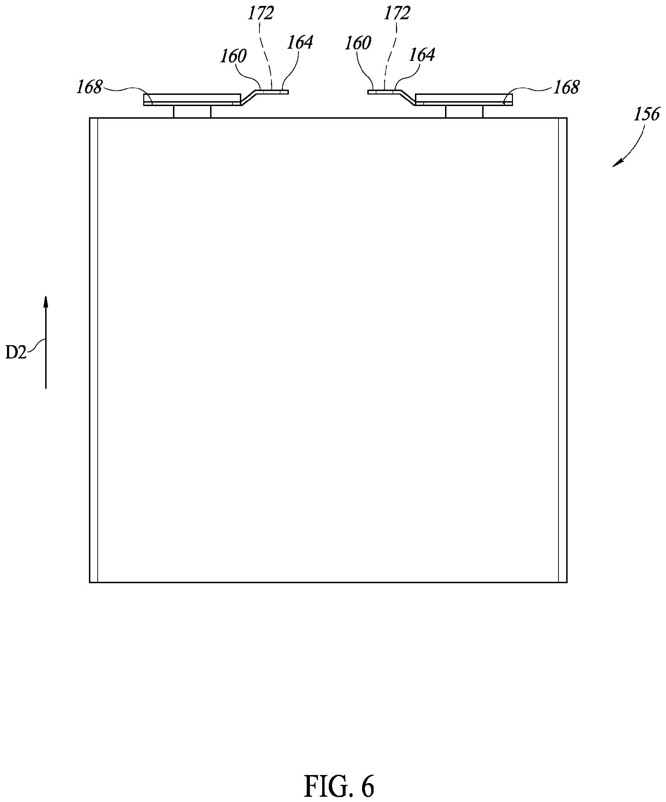

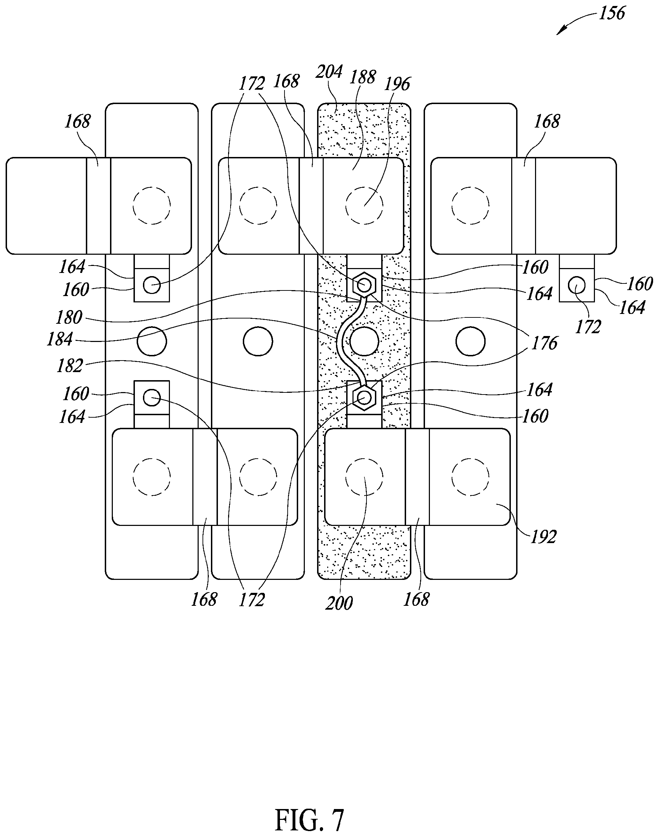

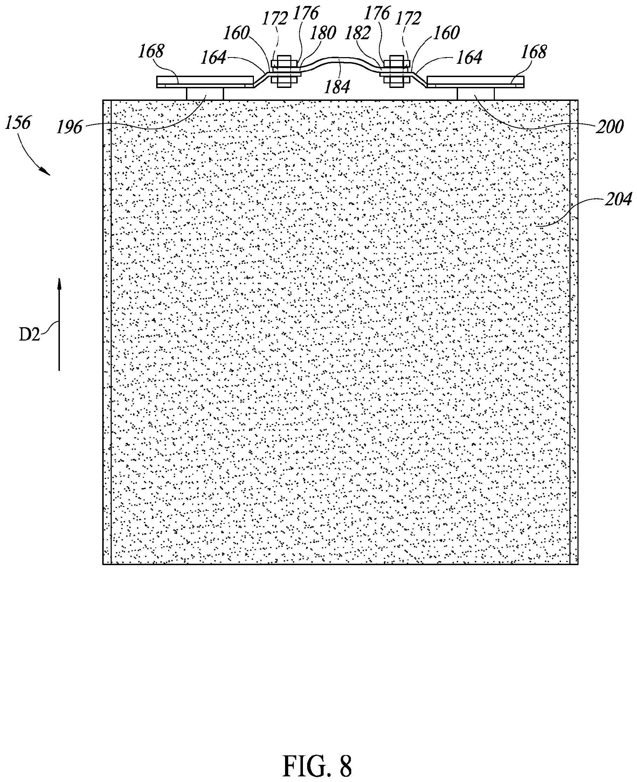

Figures 5 through 8 show another embodiment of a plurality of battery cells 156, which is similar to the embodiment described above, except in that each tab 160 of each bypass structure 164 of each bus bar 168 includes at least one aperture 172 extending therethrough. Each aperture of the at least one aperture 172 may be configured to receive a fastener 176 (Figure 8). As can be seen in Figure 6, a side view of a battery cell of Figure 5, the tab 160 may extend upward from the plurality of battery cells 156 *(i.e.,* away from the plurality of battery cells 156) in a vertical direction D2, such that a tool (not shown) may clear both any battery cell of the plurality of battery cells 156 and the tab 160 when tightening the fastener 176. The fastener 176 may be configured to electrically couple one of a first or second end 180, 182 of a bypass wire 184 to the tab 160, as is shown in Figures 7 and 8. For example, the fastener 176 may be a screw terminal or any suitable fastener for coupling the first or second end 180, 182 of the bypass wire 184 to the tab 160.

With reference to Figures 7 and 8, when the first and second ends 180, 182 of the bypass wire 184 are each electrically coupled to a respective tab 160, the bypass wire electrically couples a pair of bus bars 188, 192. Each of the bus bars 188, 192 are electrically coupled to one of a positive terminal 196 and a negative terminal 200 of a faulty battery cell 204, and the bypass wire 184 enables the faulty battery cell 204 to be bypassed. A side view of the faulty battery cell 204 and the electrical coupling of the first and second ends 180, 182 of the bypass wire 184 to the tab 160 is shown in Figure 8. The bypass wire 184 may create a short circuit between the positive terminal 196 of the faulty battery cell 204 and the negative terminal 200 of the faulty battery cell 204. Such a short circuit enables depletion of any energy stored within the faulty battery cell 204.

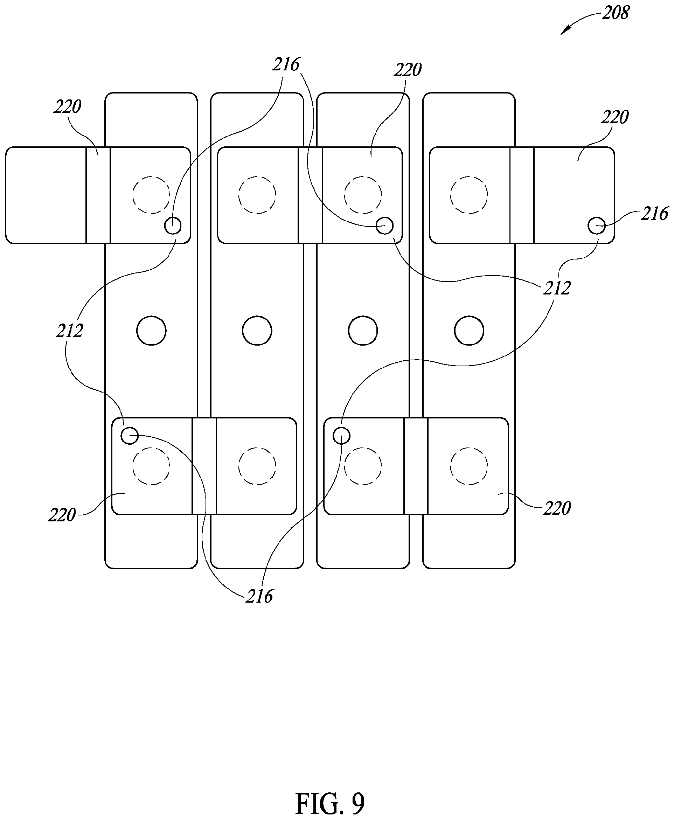

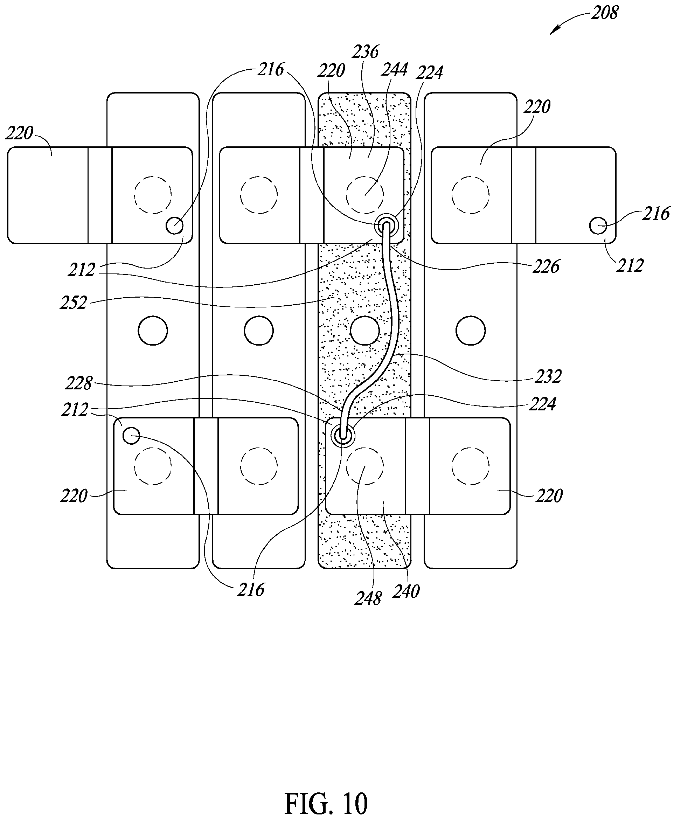

Figures 9 and 10 show another embodiment of a plurality of battery cells 208, which is similar to the embodiments described above, except in that a bypass structure 212 includes at least one aperture 216 extending through each respective bus bar 220 without the presence of a tab extension. Each aperture of the at least one aperture 216 may be configured to receive a fastener 224 extending therethrough. The fastener 224 may be configured to electrically couple one of a first or second end 226, 228 of a bypass wire 232 to the respective bus bar 220, as is shown in Figure 10. When the first and second ends 226, 228 of the bypass wire 232 are each electrically coupled to a respective bus bar of a pair of bus bars 236, 240, each bus bar 236, 240 electrically coupled to one of a positive terminal 244 and a negative terminal 248 of a faulty battery cell 252, the bypass wire 232 enables the faulty battery cell 252 to be bypassed. The bypass wire 232 may create a short circuit between the positive terminal 244 of the faulty battery cell 252 and the negative terminal 248 of the faulty battery cell 252. Such a short circuit enables depletion of any energy stored within the faulty battery cell 252.

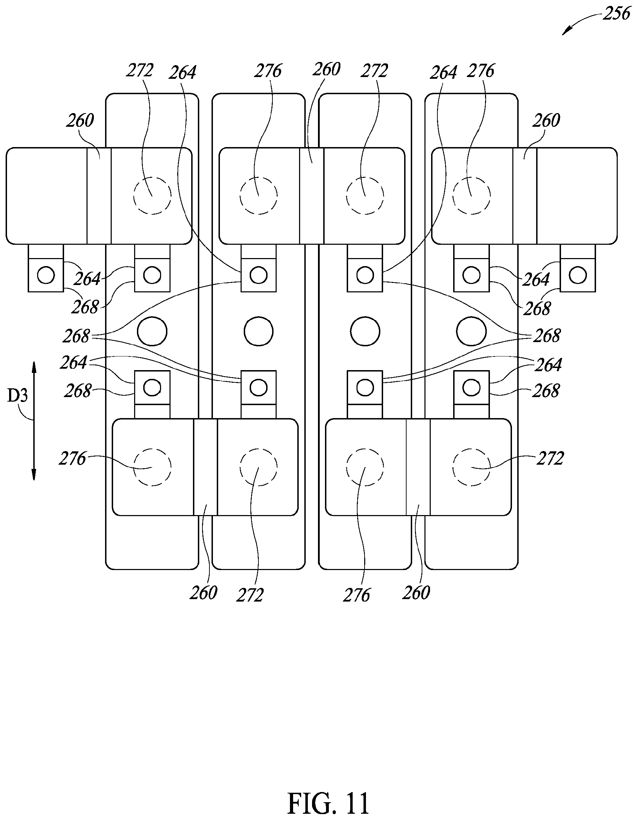

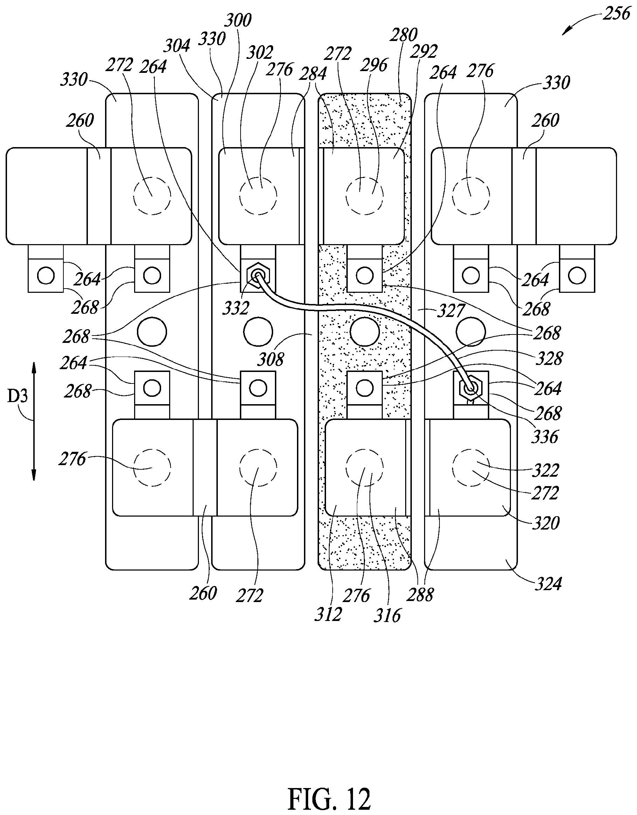

Figures 11 and 12 show another embodiment of a plurality of battery cells 256, which is similar to the embodiments described above, except in that each bus bar 260 includes multiple bypass structures 264, and each bypass structure includes a tab 268. Each positive terminal 272 and negative terminal 276 of each battery cell of the plurality of battery cells 256 may be adjacent to a tab 268. In other words, a tab 268 adjacent to the positive terminal 272 of a first battery cell may be positioned above a face of the first battery cell and a tab 268 adjacent to the negative terminal 276 of a second battery cell may be positioned above a face of the second battery cell. In such a configuration, two tabs 268 may be present on each battery cell of the plurality of battery cells 256 *(i.e.,* positioned above the battery cell). The two tabs 268 present on each battery cell of the plurality cells 256 may be spaced across each cell of the plurality of battery cells 256 in a longitudinal direction D3 from one another.

The embodiment shown in Figures 11 and 12 enables isolation of a faulty battery cell 280 and may enable bypassing of the faulty battery cell 280 without creating a permanent short circuit of the faulty battery cell 280. A configuration showing the isolation and bypassing of the faulty battery cell 280 is shown in Figure 12, which is the configuration of Figure 11 but with the faulty battery cell 280 being bypassed and isolated. Such isolation and bypassing may be accomplished by cutting either a first bus bar 284 and/or a second bus bar 288, which are both electrically coupled to the faulty battery cell 280. The first bus bar 284 may be cut such that a first cut section 292 of the first bus bar 284 is electrically coupled to a positive terminal 296 of the faulty battery cell 280 and a second cut section 300 of the first bus bar 284 is electrically coupled to a negative terminal 302 of a first separate battery cell 304. The first separate battery cell 304 may be positioned adjacent to the faulty battery cell 280 on a first side 308 of the faulty battery cell 280. The second bus bar 288 may be cut such that a first cut section 312 of the second bus bar 288 is electrically coupled to a negative terminal 316 of the faulty battery cell 280 and a second cut section 320 of the second bus bar 288 is electrically coupled to a positive terminal 322 of a second separate battery cell 324. The second separate battery cell 324 may be positioned adjacent to the faulty battery cell 280 on a second side 327 of the faulty battery cell 280. Due to the cutting of the first and/or second bus bars 284, 288, the faulty battery cell 280 is isolated from remaining battery cells of the plurality of battery cells 256.

A bypass wire 328 may be installed to reconnect the remaining battery cells 330 of the plurality of battery cells 256 while avoiding inclusion of the faulty battery cell 280. A first end 332 of the bypass wire 328 may be electrically coupled to the second cut section 300 of the first bus bar 284. A second end 336 of the bypass wire 328 may be electrically coupled to the second cut section 320 of the second bus bar 288. The electrical coupling of the bypass wire 328 to the second cut section 300 of the first bus bar 284 and the second cut section 320 of the second bus bar 288 electrically couples the first separate battery cell 304 and the second separate battery cell 324 in a circuit which does not include the faulty battery cell 280. Such electrical coupling enables the battery pack to operate without the faulty battery cell 280.

It should be understood that the configuration shown in Figures 11 and 12 may be applied to multiple faulty battery cells. In such embodiments, the first bus bar may be electrically coupled to a first faulty battery cell positioned on a first end of a group of faulty battery cells and the second bus bar may be electrically coupled to a second faulty positioned on a second end of a group of faulty battery cells opposite the first end. The first bus bar may be cut such that a first cut section of the first bus bar is electrically coupled to a positive terminal of the first faulty battery cell and a second cut section of the first bus bar is electrically coupled to a negative terminal of a first separate battery cell. The first separate battery cell may be positioned adjacent to the first faulty battery cell on the first end of the group of faulty battery cells. The second bus bar may be cut such that a first cut section of the second bus bar is electrically coupled to a negative terminal of the second faulty battery cell and a second cut section of the second bus bar is electrically coupled to a positive terminal of a second separate battery cell. The second separate battery cell may be positioned adjacent to the second faulty battery cell on a second end of the group of faulty battery cells. Due to the cutting of the first and/or second bus bars, the group of faulty battery cells is isolated from remaining battery cells of the plurality of battery cells.

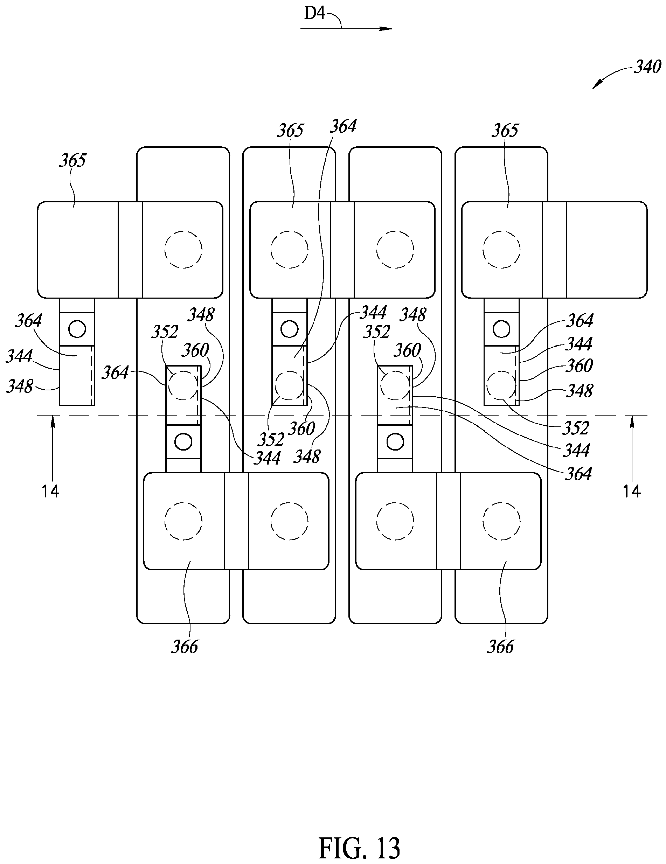

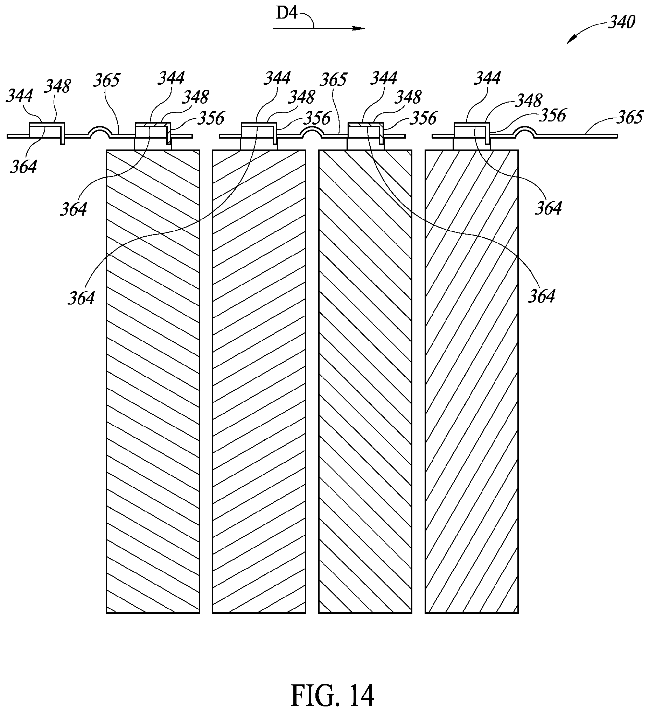

Figures 13 through 15 show another embodiment of a plurality of battery cells 340, which is similar to the embodiment shown in Figures 5 and 6, except in that each tab 344 of each bypass structure 348 is configured to route matter discharged *(i.e.,* vented) from venting valves 352 of the plurality of battery cells 340 toward a material collector (not shown) during a venting event. A venting event may release pressure from each of the plurality of battery cells 340. Each of the plurality of battery cells 340 may include a respective venting valve 352 configured to allow matter to be discharged from the battery cells 340 in the event of thermal runaway. The battery pack 100 may include a material collector for the discharged matter to pass through in order to vent the battery pack 100. The tabs 344 may be configured to direct discharged matter toward the material collector. The tabs 344 may include a vertical wall 356 positioned adjacent to the venting valve 352 on a first side 360 of the venting valve 352 and a horizontal wall 364 coupled to the vertical wall 356 and positioned above the venting valve 352, as shown in Figure 14, which is a cross-section taken at line 14-14 of Figure 13. As discharged matter passes through the venting valve 352, the vertical wall 356 and the horizontal wall 364 may substantially prevent discharged matter from flowing in a direction D4, which is opposite the material collector. It should be understood that walls may be positioned on both of opposing sides of each tab 344, such that discharged matter flows in a direction perpendicular to the direction D4, namely, generally in line with each battery cell. In this manner, vented material may be generally prevented from reaching any adjacent battery cell. Other structural arrangements may be provided and/or integrated with the bypass structure 348 to assist in guiding vented material to a collection area or region while eliminating, minimizing or reducing the risk of damage to adjacent battery cells 340.

It should be noted that the embodiment shown in Figures 13 through 15 includes bus bars 365 on one side of the plurality of battery cells 340 that are different from bus bars 366 on an opposing side of the plurality of battery cells 340. Such a varying design enables each tab 344 to cover each venting valve 352 of each battery cell of the plurality of battery cells 340. Moreover, such a varying design enables each tab 344 to guide discharged matter to the material collector. This may be accomplished by the vertical walls 356 of the tabs 348 on the plurality of battery cells 340 being positioned on the first side 360 of each respective venting valve 352.

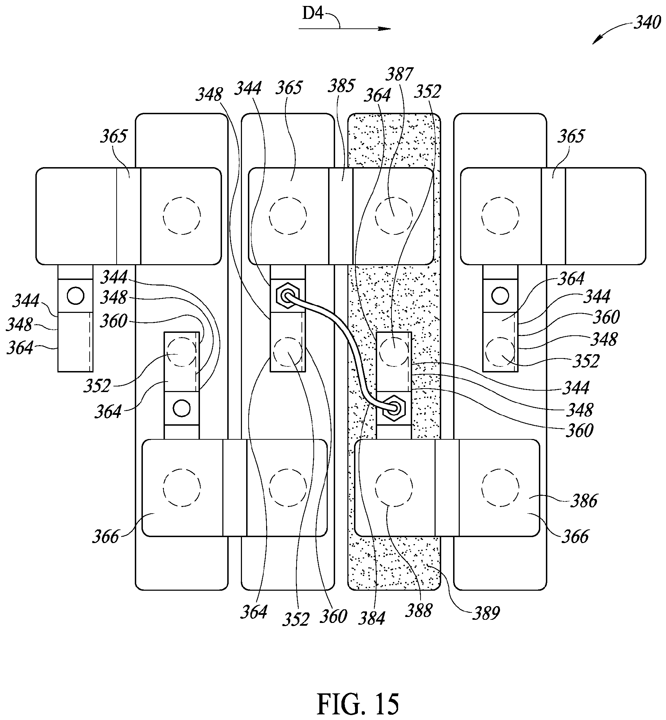

As shown in Figure 15, the connection of a bypass wire 384 to the tabs 344 may be generally identical to the connection of the bypass wire 184 in the embodiment shown in Figures 7 and 8, such that the bypass wire 384 is coupled to a pair of bus bars 385, 386 which are each electrically coupled to one of positive and negative terminals 387, 388 of the faulty battery cell 389. Such a configuration creates a short circuit between the positive and negative terminals 387, 388 of the faulty battery cell 389.

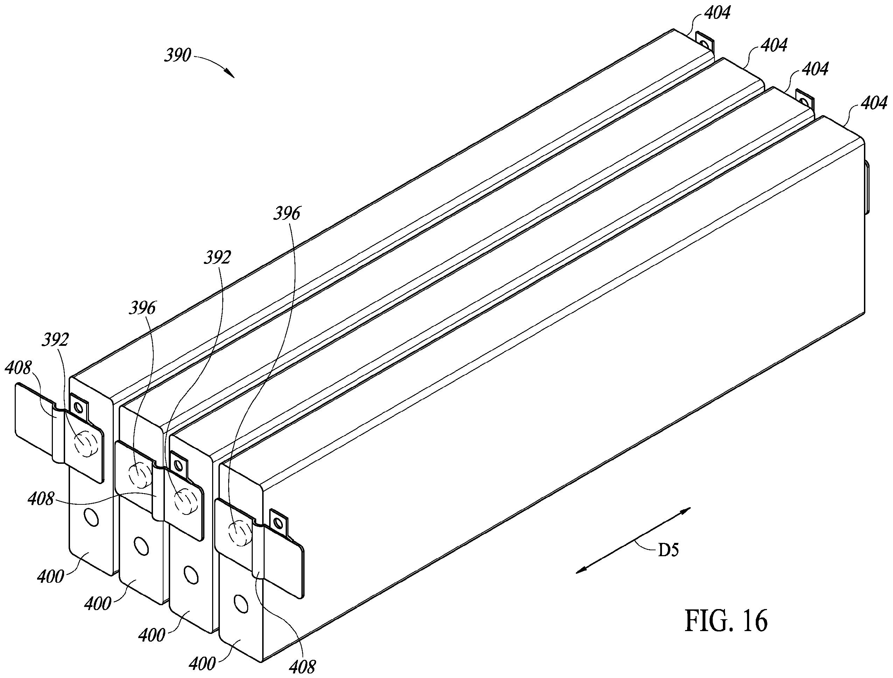

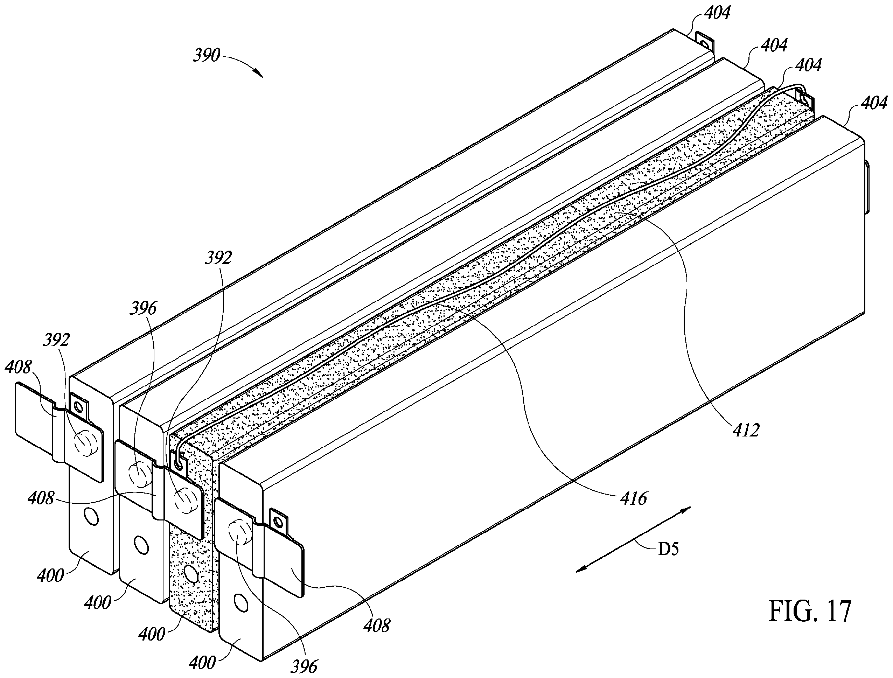

With reference to Figures 16 and 17, another embodiment of the present disclosure may include a plurality of battery cells 390 which include one of a positive terminal 392 and a negative terminal 396 on a first end face 400 of each battery cell of the plurality of battery cells 390 and the opposite terminal on a second face 404 of each battery cell of the plurality of battery cells 390. For example, the second end face 404 of each battery of the plurality of battery cells 390 may be opposite the first end face 400 of each battery cell of the plurality of battery cells 390 in a longitudinal direction D5. In such embodiments, bus bars 408 may be configured similarly to the embodiments shown in Figures 2 through 15, but the bus bars 408 may be present on the first and second end faces 400, 404 of each battery cell of the plurality of battery cells 390. Each battery cell of the plurality of battery cells 390 in such embodiments may be long, thin blade battery cells.

When bypassing a faulty battery cell 412 in such embodiments, as is shown in Figure 17, a bypass wire 416 may be configured to extend from the first end face 400 of the plurality of battery cells 390 to the second end face 404 of the plurality of battery cells 390 when bypassing the faulty battery cell 412. The electrical principles of bypassing the faulty battery cell of any of the above-described embodiments may also be utilized to bypass the faulty battery cell 412.

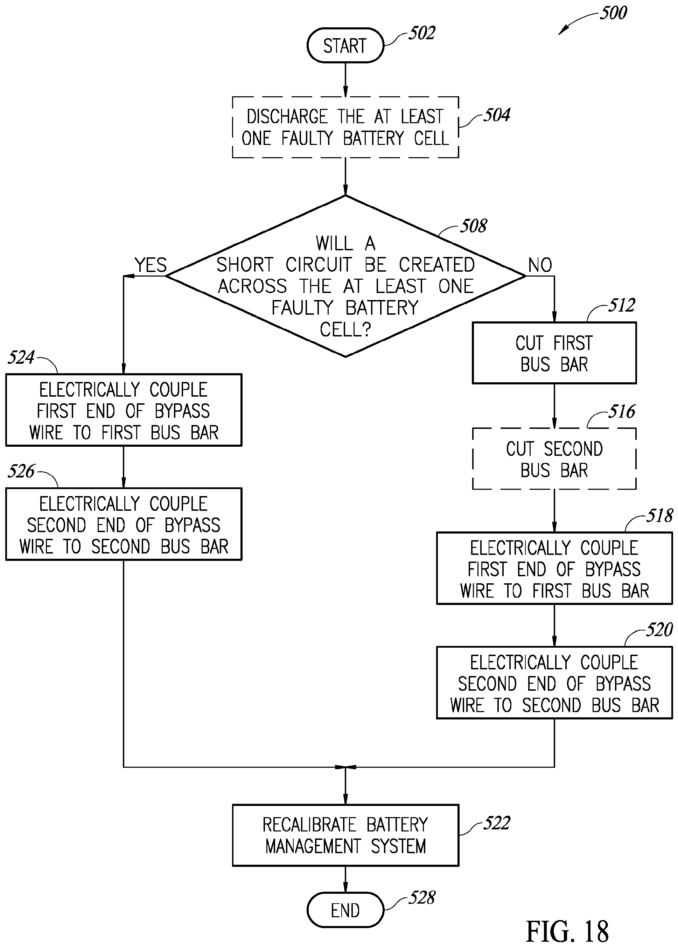

Figure 18 shows a method 500 of bypassing at least one faulty battery cell within a battery pack according to the present disclosure. At step 502, the method begins with at least one faulty battery cell being a part of a battery pack. After the step 502, at optional step 504, any remaining energy stored in the at least one faulty battery cell may be discharged such that the voltage difference between the positive and negative terminals of the faulty battery cell is zero.

Following the optional step 504, or following the step 502 if the optional step 504 is not performed, at step 508, a decision must be made whether a short circuit will be created between the positive and negative terminals of the faulty battery cell, or between the positive terminal of a first faulty battery cell on a first end of a group of faulty battery cells and a negative terminal of a second faulty battery cell on an opposite end of the group of faulty battery cells, while the at least one faulty battery cell is being bypassed. In some embodiments, a short circuit may be necessary due to the configuration of bypass structures. In order for a short circuit to be avoided, the bus bar electrically coupled to one of the positive and negative terminals of the faulty battery cell, or the bus bar electrically coupled one of the positive terminal of a first faulty battery cell on a first end of a group of faulty battery cells and a negative terminal of a second faulty battery cell on an opposite end of the group of faulty battery cells, must each include a bypass structure which maintains electrical connection to a separate battery cell from the at least one faulty battery cell even when the bus bar has been cut. For example, in the embodiment shown in Figure 4, the faulty battery cell 132 must be part of a short circuit due to the positioning of the single bypass structure 124 on the first and second bus bars 120 electrically coupled to the faulty battery cell 132. In the event the first and second bus bars 120 were to be cut, there would be no bypass structure to be utilized to electrically couple the adjacent battery cells with the bypass wire 128 while isolating the faulty battery cell 132.

Alternatively, in an embodiment such as the one shown in Figure 12, the faulty battery cell 280 may be isolated from the circuit while being bypassed due to the positions of the bypass structures 264 being associated with the second cut section 300 of the first bus bar 284 and the second cut section 320 of the second bus bar 288. The bypass wire 328 may electrically couple, and complete a circuit involving, the negative terminal 302 and the positive terminal 322 of the separate adjacent battery cells 304, 324 without including the faulty battery cell 280 in the circuit.

If it is determined that a short circuit will not be created between the positive and negative terminals of the faulty battery cell while being bypassed, then the method proceeds to step 512. At the step 512, the first bus bar is cut such that the faulty battery cell is no longer electrically coupled to the first separate battery cell. Optionally, at step 516, the second bus bar may be cut such that the faulty battery cell is no longer electrically coupled to the second separate battery cell. After the first and/or second bus bars have been cut, the method 500 then proceeds to step 518 at which a first end of a bypass wire is electrically coupled to a bypass structure of the first bus bar. The method 500 then proceeds to step 520 at which a second end of a bypass wire is electrically coupled to a bypass structure of the second bus bar. The bypass wire is coupled to the first and second separate batteries, and the battery pack has retained a circuit in which the faulty battery cell has been bypassed. The method 500 then proceeds to step 522 at which the battery management system is recalibrated to account for the faulty battery cell no longer being a part of the battery pack circuit.

Returning to the step 508, if it is determined that a short circuit will be created between the positive and negative terminals of the faulty battery cell while the faulty battery cell is being bypassed, then the method 500 proceeds directly to the step 524 at which a first end of a bypass wire is electrically coupled to a bypass structure of a first bus bar coupled to a positive terminal of the faulty battery cell, or a positive terminal of a first faulty battery cell on a first end of a group of faulty battery cells. The method 500 the proceeds to step 526 at which a second end of the bypass wire is electrically coupled to a bypass structure of a second bus bar coupled to a negative terminal of the faulty battery cell, a negative terminal of a second faulty battery cell on a second end of the group of faulty battery cells opposite the first end. The bypass wire creates a short circuit between the positive and negative terminals of the faulty battery cell, or across the group of faulty battery cells, and the battery pack has retained a circuit in which the at least one faulty battery cell has been bypassed. The method then proceeds to step 522 at which the battery management system is recalibrated.

After the step 522, the method 500 ends at step 524 at which the battery pack may be utilized with the faulty battery cell being bypassed.

The devices and systems of the disclosure each have several innovative aspects, no single one of which is solely responsible or required for the desirable attributes disclosed herein. The various features described above may be used independently of one another, or may be combined in various ways. All possible combinations and subcombinations are intended to fall within the scope of this disclosure. Various modifications to the implementations described in this disclosure may be readily apparent to those of ordinary skill in the art, and the generic principles defined herein may be applied to other implementations. Thus, the claims are not intended to be limited to the implementations shown herein, but are to be accorded the widest scope consistent with this disclosure, the principles and the novel features disclosed herein.

Certain features that may be described in this specification in the context of separate implementations also may be implemented in combination in a single implementation. Conversely, various features that may be described in the context of a single implementation also may be implemented in multiple implementations separately or in any suitable subcombination. Moreover, although features may be described above as acting in certain combinations and even initially claimed as such, one or more features from a claimed combination can be excised from the combination, and the claimed combination may be directed to a subcombination or variation of a subcombination. No single feature or group of features is necessary or indispensable to each and every embodiment.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. In addition, the articles "a," "an," and "the" as used in this application and the appended claims are to be construed to mean "one or more" or "at least one" unless specified otherwise.

Moreover, although aspects of the various implementations have been described in the context of commercial vehicles, such as heavy-duty trucks, it is appreciated that aspects of the implementations described herein, may be applicable to other applications.

In general, in the following claims, the terms used should not be construed to limit the claims to the specific embodiments disclosed in the specification and the claims, but should be construed to include all possible embodiments along with the full scope of equivalents to which such claims are entitled.

## Claims

1. A battery pack, comprising:
a plurality of battery cells arranged in an array; and
a plurality of bus bars, each bus bar of the plurality of bus bars configured to electrically couple a pair of battery cells in series by attaching to a positive terminal of a first battery cell and a negative terminal of a second battery cell, each bus bar of the plurality of bus bars including at least one bypass structure configured to be electrically coupled to a bypass wire,
wherein, when the bypass wire is electrically coupled to a pair of bus bars, the bypass wire enables at least one battery cell of the plurality of battery cells to be bypassed.

2. The battery pack of claim 1, wherein the battery pack is configured such that when the bypass wire is electrically coupled to a pair of bus bars, the bypass wire creates a short circuit across at least one battery cell to be bypassed.

3. The battery pack of claim 1, wherein each bypass structure includes at least one tab extending from the respective bus bar of which the bypass structure is a part.

4. The battery pack of claim 3, wherein each bypass structure further includes at least one aperture extending through a tab of the at least one tab, each aperture of the at least one aperture configured to receive a fastener configured to electrically couple an end of the bypass wire to the tab.

5. The battery pack of claim 3, wherein, during a venting event, a tab of the at least one tab is configured to route matter discharged from a vent valve of a battery cell of the plurality of battery cells toward a material collector.

6. The battery pack of claim 1, wherein each bypass structure includes at least one aperture extending through each respective bus bar, each aperture of the at least one aperture configured to receive a fastener configured to electrically couple an end of the bypass wire to the respective bus bar.

7. The battery pack of claim 1, wherein at least one bus bar of a pair of bus bars of the plurality of bus bars electrically coupled to at least one battery cell to be bypassed is configured to be cut such that a first cut section of a first cut bus bar of the pair of bus bars is electrically coupled to a terminal of the at least one battery cell to be bypassed and a second cut section of the first cut bus bar of the pair of bus bars is electrically coupled to a first separate battery cell, and wherein the bypass wire is configured to electrically couple the second cut section of the first cut bus bar and one of a cut section of a second cut bus bar electrically coupled to a second separate battery cell and an uncut bus bar of the pair of bus bars, such that the at least one battery cell to be bypassed is bypassed.

8. The battery pack of claim 1, further comprising a battery management system, the battery management system configured to be recalibrated when at least one battery cell of the plurality of battery cells is bypassed, wherein recalibration of the battery management systems includes at least one of bypassing monitoring of at least one bypassed battery cell, bypassing balancing of the at least one bypassed battery cell, excluding the at least one bypassed battery cell from state-of-charge estimation, excluding the at least one bypassed battery cell from state-of-health estimations, excluding the at least one bypassed battery cell from voltage limits of the battery pack, and excluding the at least one bypassed battery cell from temperature limits of the battery pack.

9. A method of bypassing at least one faulty battery cell within a battery pack, comprising:
electrically coupling a first end of a bypass wire to a bypass structure of a first bus bar, the first bus bar configured to electrically couple a first pair of battery cells in series; and
electrically coupling a second end of the bypass wire to a bypass structure of a second bus bar, the second bus bar configured to electrically couple a second pair of battery cells in series,
wherein the electrical coupling of the first end of the bypass wire to the bypass structure of the first bus bar and the electrical coupling of the second end of the bypass wire to the bypass structure of the second bus bar causes the at least one faulty battery cell to be bypassed.

10. The method of claim 9, further comprising:
creating a short circuit across the at least one faulty battery cell.

11. The method of claim 9, wherein the electrical coupling of the first end of the bypass wire to the bypass structure of the first bus bar includes electrically coupling the first end of the bypass wire to a tab of the bypass structure of the first bus bar and the electrical coupling of the second end of the bypass wire to the bypass structure of the second bus bar includes electrically coupling the second end of the bypass wire to a tab of the bypass structure of the second bus bar.

12. The method of claim 11, wherein the electrical coupling of the first end of the bypass wire to the bypass structure of the first bus bar includes extending a first fastener through an aperture extending through the tab of the bypass structure of the first bus bar and the electrical coupling of the second end of the bypass wire to the bypass structure of the second bus bar includes extending a second fastener through an aperture of the tab of the bypass structure of the second bus bar.

13. The method of claim 9, wherein the electrical coupling of the first end of the bypass wire to the bypass structure of the first bus bar includes extending a first fastener through an aperture of the bypass structure of the first bus bar, wherein the electrical coupling of the second end of the bypass wire to the bypass structure of the second bus bar includes extending a second fastener through an aperture of the bypass structure of the second bus bar, wherein the aperture of the bypass structure of the first bus bar is present on the first bus bar, and wherein the aperture of the bypass structure of the second bus bar is present on the second bus bar.

14. The method of claim 9, further comprising cutting at least one of the first bus bar and the second bus bar,
wherein a first end of the bypass wire is electrically coupled to a first cut section of a first cut bus bar, the first cut section of the first cut bus bar being electrically coupled to a terminal of a first adjacent battery cell and a second end of the bypass wire is electrically coupled to one of a first cut section of a second cut bus bar and an uncut bus bar of the first bus bar and the second bus bar, the first cut section of the second cut bus bar being electrically coupled to a terminal of a second adjacent battery cell, such that the at least one faulty battery cell is bypassed by the bypass wire.

15. The method of claim 9, further comprising:
recalibrating a battery management system of the battery pack after the at least one faulty battery cell has been bypassed, wherein the recalibrating of the battery management system includes at least one of bypassing monitoring of the at least one faulty battery cell, bypassing balancing of the at least one faulty battery cell, excluding the at least one faulty battery cell from state-of-charge estimation, excluding the at least one faulty battery cell from state-of-health estimations, excluding the at least one faulty battery cell from voltage limits of the battery pack, and excluding the at least one faulty battery cell from temperature limits of the battery pack.
